# EUROPÄISCHE PATENTSCHRIFT

(11) **EP 3 836 502 B1**
(45) Veröffentlichungstag und Bekanntmachung des Hinweises auf die Patenterteilung: **31.01.2024**
(21) Anmeldenummer: 19214563.9
(22) Anmeldetag: 09.12.2019
(51) Int. Cl.: H04L 65/1053, H04L 65/1069, H04L 65/1046

(54) **COMPUTER-IMPLEMENTIERTES VERFAHREN ZUR VERNETZUNG EINER ERSTEN WEBRTC-BASIERTEN KOMMUNIKATIONSPLATTFORM UND EINER ZWEITEN SIP- BASIERTEN KOMMUNIKATIONSPLATTFORM UND KOMMUNIKATIONSNETZWERK**
COMPUTER-IMPLEMENTED METHOD FOR NETWORKING A FIRST WEBRTC BASED COMMUNICATION PLATFORM AND A SECOND SIP-BASED COMMUNICATION PLATFORM AND COMMUNICATION NETWORK
PROCÉDÉ MIS EN OEUVRE PAR ORDINATEUR PERMETTANT DE METTRE EN RÉSEAU UNE PREMIÈRE PLATEFORME DE COMMUNICATION BASÉE SUR WEBRTC ET UNE SECONDE PLATEFORME DE COMMUNICATION BASÉE SUR SIP ET RÉSEAU DE COMMUNICATION

(43) Veröffentlichungstag der Anmeldung: 16.06.2021
(73) Patentinhaber: Unify Patente GmbH & Co. KG, 81739 München (DE)
(72) Erfinder: Rist, Claus, 44797 Bochum (DE); SCHWARTZE, Jürgen, 58239 Schwerte (DE)
(74) Vertreter: Schaafhausen Patentanwälte PartGmbB

(56) Entgegenhaltungen:
- EP-A1- 3 016 341
- DE-A1-102016 000 870
- DE-A1-102016 125 345

## Beschreibung

Die vorliegende Erfindung betrifft ein Computer-implementiertes Verfahren zur Vernetzung einer ersten WebRTC-basierten Kommunikationsplattform und einer zweiten SIP-basierten Kommunikationsplattform sowie ein Kommunikationsnetzwerk mit einer ersten WebRTC-basierten Kommunikationsplattform und einer zweiten SIP-basierten Kommunikationsplattform.

Im Zuge des Zusammenwachsens bzw. Interworkings von Voice over IP (VoIP)-Kommunikationssystemen, welche meist Session Initiation Protocol (SIP)-basiert sind, und Unified Communications (UC/UCC) Lösungen mit Enterprise Real-Time Kollaborationssystemen, welche meist WebRTCbasiert sind, benötigen die entsprechenden WebRTC-Clients Zugriff auf die Features des UCC-Systems bzw. ein geeignetes Interworking mit den VoIP-Plattformen.

Daher besteht ein zunehmender Bedarf, die unterschiedlichen Protokollarchitekturen, welche zum Teil standardisiert und miteinander synchronisiert sind, zu integrieren, jedoch möglichst ohne dabei erhöhte Sicherheits- bzw. Administrationsaufwände zu erzeugen.

Dieses stellt insbesondere bei verteilten Systemen, bei denen Teile der Lösung Cloud-basiert sind, eine erhebliche Herausforderung dar. Darüber hinaus kann die Harmonisierung der Protokollarchitekturen aus Aufwandsgründen unwirtschaftlich sein und dem Gedanken des Investitionsschutzes von VoIP-Bestandslösungen entgegenstehen.

Beispielsweise ist es problematisch, eine Kommunikations- und Kollaborationsplattform, wie beispielsweise Circuit, als Social Collaboration Medium in Kombination mit klassischen Kommunikationssystemen (z. B. OpenScape Business inklusive integriertem UC-Server) einzusetzen. Die Herausforderung liegt in einer möglichst nahtlosen Integration, so dass z. B. aus dem Circuit Client heraus CTI- und UC-Leistungsmerkmale der OSBiz gesteuert werden können. Bei der Integration von CTI- und UC-Diensten in Circuit Clients über das bestehende OSBiz Web Service Interface (WSI via HTTPS) hat sich das Problem gestellt, dass zwischen der Plattform OpenScape Business (OSBiz) und dem Circuit Telephony Connector (TC) ein Load Balencer (LB) eingesetzt wird. Die Aufgabe des Load Balancers ist es, einen zentralen Zugangspunkt für die Anbindung externer Kommunikationsserver wie OpenScape Voice (OSV) oder OpenScape Business (OSBiz) bereitzustellen und gleichzeitig durch Lastverteilung den bestmöglichen verfügbaren TC für die Konnektivität zum Circuit Backend zur Verfügung zu stellen. Da der OSBiz nur die IP-Adresse des LB bekannt ist, kann keine HTTPS-Verbindung zu der bereits per SIP verbundenen "richtigen" TC-Instanz aus einem Pool frei wählbaren TC hergestellt werden. Daher ist keine vorteilhafte WSI Verbindung möglich. Es sei angemerkt, dass im Folgenden anstelle der Verwendung der IP-Adresse ebenso der DNS-Name verwendet werden kann.

Daher ist aus dem Stand der Technik eine Lösung zur Integration von CTI- und UC-Diensten bekannt, die die in den Clients einer Kommunikationsplattform (beispielsweise Circuit - Circuit^{®} by Unify) erforderliche Payload auf mehrere Ebenen bzw. Layer verteilt. Dies wird unter anderem wie im Folgenden beschrieben erreicht. Um den für einen SIP Trunk erforderlichen 3^{rd}-party CTI Link implizit zwischen einer Circuit- und einer OSBiz-Instanz aufzubauen, wird nach erfolgreicher SIP Registrierung vom TC eine erste SIP Notify Nachricht mit einer CSTA RequestSystemStatus gesendet. Zur weiteren Überwachung des CTI Links sendet die OSBiz nun zyklisch eine SIP Notify mit einer SystemStatus. Hierbei werden nun die ursprünglich verborgenen Informationen IP-Adresse des gewählten TC sowie der von der jeweiligen TC Instanz geöffnete HTTPS Server Port bekannt gegeben. Mit dem zusätzlichen Austausch dieser Information ist dann eine direkte / parallele Verbindung vom WSI zu einem hinter dem SBC verborgenen TC über HTTPS möglich.

EP 3 016 341 A1 betrifft die effiziente Gestaltung von IP-basierten Kommunikationsdiensten. Zum einen können gemäß diesem Dokument WebRTC-Entwicklungen vereinfacht werden, zum anderen kann eine optimale Infrastruktur bereitgestellt werden, die es ermöglicht, verschiedene WebRTC-Kommunikationsszenarien kostengünstig, modular und erweiterbar umzusetzen.

DE 10 2016 000 870 A1 bezieht sich auf ein computerimplementiertes Verfahren zum Ausführen einer Anrufsteuerung eines Clients auf einen einen Benutzer repräsentierenden Telefonie-Endpunkt, ein Computerprogrammprodukt zur Implementierung des Verfahrens, einen maschinenlesbaren Datenträger mit darauf gespeichertem Computerprogrammprodukt sowie einen entsprechenden hierfür ausgebildeten Porthandler. Hiermit wird das Probelm gelöst, Leistungsmerkmale ohne proprietäre Signalisierung nutzen zu können.

Jedoch ist das oben beschriebene, aus dem Stand der Technik bekannte Verfahren in der Praxis nicht immer anwendbar, beispielsweise wenn Security-Richtlinien die Öffnung von Firewalls für Web Services aus dem Internet verbieten.

Bei der geplanten Integration von "klassischen" UCC-Diensten (Unified Communication and Collaboration) für den Circuit-User über das Web Service Interface (WSI via https - kurz: WSI) hat sich das Problem gestellt, dass zwischen der Plattform OpenScape Business (OSBiz) und dem Circuit Telephony Connector (TC) Komponenten eingesetzt werden, die einen direkten Verbindungsaufbau zwischen den Serverkomponenten erschweren.

Neben den Firewalls, die ggf. manuelle Administrationseingriffe erfordern, wird in der Circuit Cloud ein Load Balancer (LB), wie oben bereits erwähnt, eingesetzt, dessen Aufgabe es ist, im Rahmen der Lastverteilung in hochskalierenden Umgebungen (viele User/Clients insbesondere in der Cloud) einen eindeutigen Zugang eines OpenScape Business Kommunikationssystems zu einer von mehreren verfügbaren TC-Instanzen für die Konnektivität zum Circuit Backend zur Verfügung zu stellen. Aus Performance-Gründen arbeiten Load Balancer üblicherweise verbindungslos (d.h. ohne Session-Awareness), was eine Koordination unterschiedlicher paralleler Protokollverbindungen massiv erschwert. Da beispielsweise der OSBiz nur die (SIP-)IP-Adresse des LB bekannt ist, kann keine davon unabhängige HTTPS-Verbindung zu genau dem aus einem Pool freiwählbaren TC hergestellt werden, welcher bereits die zuvor ausgehandelte SIP-Verbindung verwaltet.

Daher ist es eine Aufgabe der vorliegenden Erfindung, ein Computer-implementiertes Verfahren und ein Kommunikationsnetzwerk bereitzustellen, welche das oben genannte Problem lösen. Insbesondere ist es eine Aufgabe der vorliegenden Erfindung, ein Computer-implementiertes Verfahren und ein Kommunikationsnetzwerk bereitzustellen, welche es ermöglichen, Kommunikationsknoten über das Internet mittels Web Services zu vernetzen, ohne dass über den VoIP Signalisierungskanal hinaus zusätzliche Netzwerk-/Socketverbindungen aufgebaut werden müssen.

Diese Aufgabe wird durch ein Computer-implementiertes Verfahren zur Vernetzung einer ersten WebRTC-basierten Kommunikationsplattform und einer zweiten SIP-basierten Kommunikationsplattform mit den Merkmalen gemäß Anspruch 1 sowie durch ein Kommunikationsnetzwerk mit den Merkmalen gemäß Anspruch 11 gelöst. Bevorzugte Ausführungsformen sind in den jeweiligen Unteransprüchen spezifiziert.

Dementsprechend wird gemäß der vorliegenden Erfindung ein Computer-implementiertes Verfahren zur Vernetzung einer ersten WebRTC-basierten Kommunikationsplattform mit zumindest einem Load Balancer, zumindest einem Telephony Connector, TC, und einem UCC Connector, mit einer zweiten SIP-basierten Kommunikationsplattform, auf welchem UCC-Web-Services bereitgestellt werden, und welche mit UCC-Clients über WSI kommuniziert und zumindest einer PBX bereitgestellt, wobei das Verfahren die folgenden Schritte aufweist:
- Registrieren, von zumindest einem WebRTC-Client, über den UCC Connector der ersten Kommunikationsplattform;
- Aufbauen einer SIP-Trunk-Kommunikationsverbindung zwischen dem LB und dem TC der ersten Kommunikationsplattform und einem auf der zweiten Kommunikationsplattform bereitgestellten UCC-Web-Service, wobei eine SIP Notify Meldung verwendet wird, welche WSI in XML überträgt, um so einen WSI over SIP Link bereitzustellen.

Die oben genannte Aufgabe wird demzufolge erfindungsgemäß allgemein mittels einer integrierten und synchronisierten Gesamt-Protokollarchitektur gelöst, welche ihrerseits auf generischen Erweiterungsmechanismen des SIP-Protokolls aufbaut. Insbesondere wird das oben genannte Problem durch das erfindungsgemäße Verfahren dadurch gelöst, dass die Elemente des Web Services Protokolls über die vorhandene VoIP Verbindung (z.B. SIP Trunk) getunnelt werden - mittels WSI over SIP:
Gemäß dem erfindungsgemäßen Ansatz ist es möglich, den WSI Datenverkehr auf einen Transport via SIP ("SIP-Tunneling") zu reduzieren und trotzdem die erforderlichen CTI- und UC-Diensten des Web Service Interface (WSI) der OSBiz für Circuit oder andere zu vernetzende Kommunikationssysteme / UCC Lösungen zur Verfügung zu stellen.

Gemäß einer bevorzugten Ausführungsform handelt es sich bei der ersten Kommunikationsplattform um die Kommunikations- und Kollaborationsplattform bzw. Applikation Circuit^{®} (Circuit).

Gemäß einer weiteren bevorzugten Ausführungsform handelt es sich bei der zweiten Kommunikationsplattform um OpenScape Business (OSBiz).

Vorzugsweise wird der XML Body sowohl für den SIP-Trunk als auch für einen spezifischen UCC User gesendet.

Gemäß einer weiteren bevorzugten Ausführungsform wird die SIP Notify Meldung mit einer Prüfanfrage von dem TC der ersten Kommunikationsplattform an die zweite Kommunikationsplattform gesendet.

Vorzugsweise weist das Verfahren weiterhin einen Schritt des Überwachens des WSI over SIP Links auf, wobei die zweite Kommunikationsplattform zyklisch SIP Notify Meldungen mit Prüfanfragen an die erste Kommunikationsplattform sendet.

Ferner kann das Verfahren auch einen Schritt des Authentifizierens umfassen, wobei sich der TC an der zweiten Kommunikationsplattform über den WSI over SIP Link durch ein Login, insbesondere mittels VoIP Trunk Credentials, authentifiziert.

Vorzugsweise umfasst die Kennzeichnung eines Transports von dem WSI XML Body innerhalb der SIP Notify Meldung ein Content-Type: application/wsi+xml und ein Event:b2buaWSI.

Gemäß noch einer weiteren bevorzugten Ausführungsform umfasst das Verfahren weiterhin einen Schritt einer Fehlerbehandlung durch Kapselung innerhalb des XML Body, wobei jedes Notify-Event: b2buaWSI mit einer 200 OK Meldung beantwortet wird.

Vorzugsweise arbeitet der Load Balancer (LB) verbindungslos.

Darüber hinaus wird ein Kommunikationsnetzwerk mit einer ersten WebRTC-Kommunikationsplattform mit zumindest einem verbindungslos arbeitenden Load Balancer, zumindest einem Telephony Connector, TC und einem UCC Connector, und mit einer zweiten SIP-basierten Kommunikationsplattform bereitgestellt, auf welcher zumindest ein UCC-Web-Service bereitgestellt wird, und welche mit zumindest einem UCC-Client über WSI kommuniziert und zumindest einer PBX, wobei die erste Kommunikationsplattform den zumindest einen UCC-Web-Service von der zweiten Kommunikationsplattform über einen WSI over SIP Link zwischen der ersten und zweiten Kommunikationsplattform abruft.

Die Erfindung und Ausführungsformen davon werden im Folgenden detailliert in Verbindung mit der Zeichnung beschrieben, in welchen:
- Fig. 1: eine schematische Darstellung eines Kommunikationsnetzwerks gemäß einer Ausführungsform der Erfindung zeigt;
- Fig. 2: eine schematische Darstellung des Aufbaus eines WSI over SIP Trunking Tunnels zwischen der ersten Kommunikationsplattform und der zweiten Kommunikationsplattform gemäß einer Ausführungsform der Erfindung zeigt;
- Fig. 3: eine schematische Darstellung des WSI Link Aufbaus gemäß einer Ausführungsform der Erfindung zeigt;
- Fig. 4: schematisch den Ablauf für ein WSI Login gemäß einer Ausführungsform der Erfindung zeigt;
- Fig. 5: schematisch den Ablauf zur Überwachung des WSI Links gemäß einer Ausführungsform der Erfindung zeigt; und
- Fig. 6.: schematisch den Ablauf für ein sogenanntes User Event zeigt.

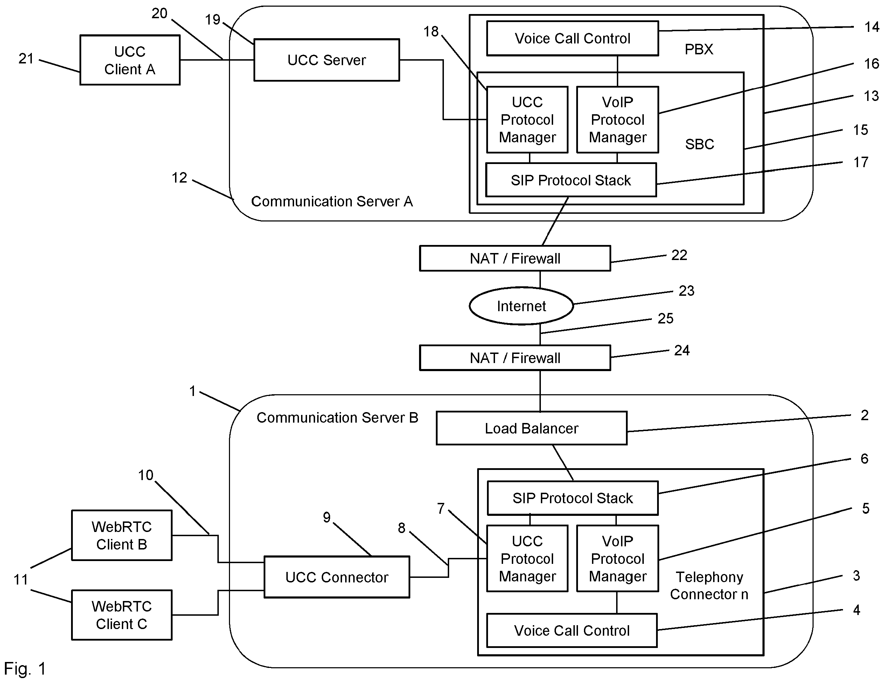

Fig. 1 ist eine schematische Darstellung eines Kommunikationsnetzwerks gemäß einer Ausführungsform der Erfindung, in welchem eine erste Kommunikationsplattform 1 mit einer zweiten Kommunikationsplattform 12 derartig vernetzt ist, dass die Übertragung von UCC-Diensten für das Interworking zwischen den jeweiligen Kommunikationsplattformen mittels des über den VoIP Kanal getunnelten WSI ermöglicht.

Zunächst werden jedoch die unten verwendeten Begriffe bzw. deren Funktionen kurz erläutert.

Ein Webservice (auch Webdienst) ermöglicht die Maschine-zu-Maschine-Kommunikation auf Basis von HTTP oder HTTPS über Rechnernetze wie das Internet. Dabei werden Daten ausgetauscht und auf entfernten Computern Funktionen aufgerufen. Jeder Webservice besitzt einen Uniform Ressource Identifier (URI), über den er eindeutig identifizierbar ist, sowie eine Schnittstellenbeschreibung in maschinenlesbarem Format (als XML-Artefakt), die definiert, wie mit dem Webservice zu interagieren ist. Die Kommunikation kann (muss aber nicht) über Protokolle aus dem Internetkontext wie HTTP laufen und kann XML- oder JSON-basiert sein.

Zur Architektur wird Folgendes angemerkt. Client-Programme senden im Allgemeinen Anfragen an einen Webservice, und dieser antwortet mit der gewünschten Information. Webservices sind Bestandteil von Softwaresystemen, die automatisiert Daten austauschen oder Funktionen auf fernen Rechnern aufrufen.

Wieder Bezug nehmend auf die Figur, ist hier eine erste Kommunikationsplattform 1 (in der Figur als Communication Server B bezeichnet) mit einem Load Balancer 2, einer Anzahl von Telephony Connectoren, TCs, 3 und zugehörigen UCC- Connector 9 dargestellt, wobei jeder Telephony Connector, TC, 3 zum einen die klassischen Aufgaben eines Session Border Controller übernimmt. Session Border Controller (SBC) sind Netzwerkkomponenten, die dazu dienen, verschiedene Rechnernetzen auf sichere Art und Weise zu koppeln, oder Rechnernetzen mit unterschiedlichen Sicherheitsanforderungen zu koppeln. Üblicherweise werden SBC beispielsweise in IP-Telefonie-Netzwerken (VoIP) eingesetzt, um externe (unsichere) Datennetze mit internen (sicheren) IT-Strukturen zu koppeln oder Sitzungen zu implementieren. In dem hier dargestellten Ausführungsbeispiel wird stellt der SBC einen SIP Protocol Stack 6 und eine VoIP Protocol Manager 5 Voice Funktionalität für die Voice Call Control Einheit 4 zur Verfügung. Zum anderen erlaubt der Telephony Connector, TC, 3 mit Hilfe eines UCC Protocol Manager 7 die Verbindung zu einem UCC Connector 9. In einem weiteren Ausführungsbeispiel ist WSI 8 ein Service, der zwischen UCC Protocol Manager 7 und UCC Connector 9 ausgeführt wird.

Diese erste Kommunikationsplattform 1 kann beispielsweise durch Circuit realisiert werden, wobei WebRTC Clients 11 über jeweilige Kommunikationsverbindungen 10 über den UCC-Connector 9 mit der Kommunikationsplattform 1 kommunizieren.

Bei der zweiten Kommunikationsplattform 12 (in der Figur als Communication Server A bezeichnet) kann es sich beispielsweise um OSBiz mit einer Private Branch Exchange, einem privaten Telefonnetz innerhalb eines Unternehmens oder einer Organisation, PBX 13 und einem UCC-Server 19 handeln, wobei die PBX 13 aus einer Voice Call Control Einheit 14 und einem SBC 15 mit den Komponenten SIP Protocol Stack 17, VolP Protocol Manager 16 und UCC Protocol Manager 18, bestehen kann. Hier findet eine Client-zu-Server Kommunikation zwischen UCC-Clients 21 und dem UCC-Server 19 über einen WSI Link 20 statt. Bei WSI handelt es sich um eine Schnittstelle, die wiederum zwischen einem UCC Server 19 und dem UCC Protocol Manager 18 implementiert wird.

Ergänzend sei darauf hingewiesen, dass die Figur lediglich die WSI Signalisierung, nicht jedoch die obligatorische Voice Signalisierung sowie weitere Services berücksichtigt.

Jede Kommunikationsplattform 1, 12 wird durch eine jeweilige NAT / Firewall geschützt, wobei die NAT / Firewall 22 für die zweite Kommunikationsplattform 12 und die NAT / Firewall 24 für die erste Kommunikationsplattform 1 vorgesehen ist. Die erste Kommunikationsplattform 1 und die zweite Kommunikationsplattform 12 sind miteinander beispielsweise über das Internet 23 verbindbar, wobei die Elemente des Web Services Protokolls über die vorhandene VoIP Verbindung (z. B. SIP Trunk) getunnelt werden, WSI over SIP, was in der Figur durch das Bezugszeichen 25 gekennzeichnet ist. Somit können die vorhandenen OpenScape Business Web Services über die Client-zu-Server Kommunikation hinaus vorteilhafterweise auch für eine Server-zu-Server Synchronisation (Federation) von UC-Inhalten (z.B. Verzeichnissen) und Statusinformationen (z.B. User Presence Stati) genutzt werden.

Es sei angemerkt, dass der hier dargestellte Anwendungsfall der Vernetzung von OSBiz UCC-Server 19 und Circuit bzw. der ersten Kommunikationsplattform 2 nur ein Ausführungsbeispiel ist. In gleicher Weise könnten auch OSBiz mit OpenScape Voice/UC bzw. OSBiz mit OSBiz vernetzt werden, ohne dass sich die zu vernetzenden Knoten in einer gemeinsamen Telefonie- und/oder UC-Domäne befinden müssen.

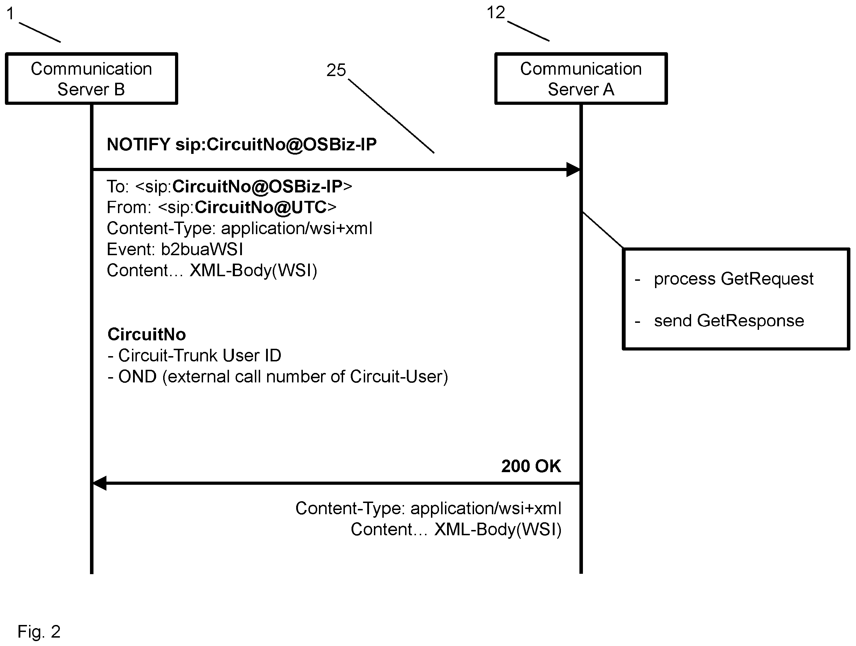

Fig. 2 ist eine schematische Darstellung des Aufbaus eines WSI Links 25 (siehe Fig. 1: WSI over SIP) zwischen der ersten Kommunikationsplattform 1 und der zweiten Kommunikationsplattform 12 gemäß einer Ausführungsform der Erfindung bzw. des Aufbaus eines WSI over SIP Trunking Tunnels. Insbesondere soll der im Folgenden beschriebene Ansatz aufzeigen, wie der WSI Datenverkehr auf einen Transport via SIP ("SIP-Tunneling") reduziert werden kann und trotzdem die erforderlichen CTI- und UC-Dienste des Web Service Interface (WSI) der OSBiz für Circuit oder andere zu vernetzende Kommunikationssysteme / UCC Lösungen zur Verfügung stehen.

Gemäß der hier beschriebenen Ausführungsform wird für den Aufbau und die Aufrechterhaltung des WSI Links 25 zwischen OSBiz (zweite Kommunikationsplattform 12) sowie TC 3 und UCC Connector 9 der ersten Kommunikationsplattform 1 (Circuit; siehe Fig. 1) SIP Notify Meldungen ("unsolicited Notify") verwendet, die WSI in XML übertragen.

Ein Beispiel für die Kennzeichnung des Transportes von einem WSI XML-Body innerhalb einer SIP NOTIFY ist:
- Content-Type: application/wsi+xml
- Event: b2buaWSI

Der XML-Body kann je nach Kontext sowohl für den Trunk (z.B. Linküberwachung - z.B. Circuit-Trunk User ID) als auch für einen spezifischen UCC User (z.B. Update des Anwesenheitsstatus - z.B. OND = external call number of Circuit User) gesendet werden.

Die Fehlerbehandlung (error handling) erfolgt durch eine Kapselung innerhalb des XML-Body - dadurch wird jedes NOTIFY Event: b2buaWSI mit einer 200 OK beantwortet (s. Tabelle 1 unten).

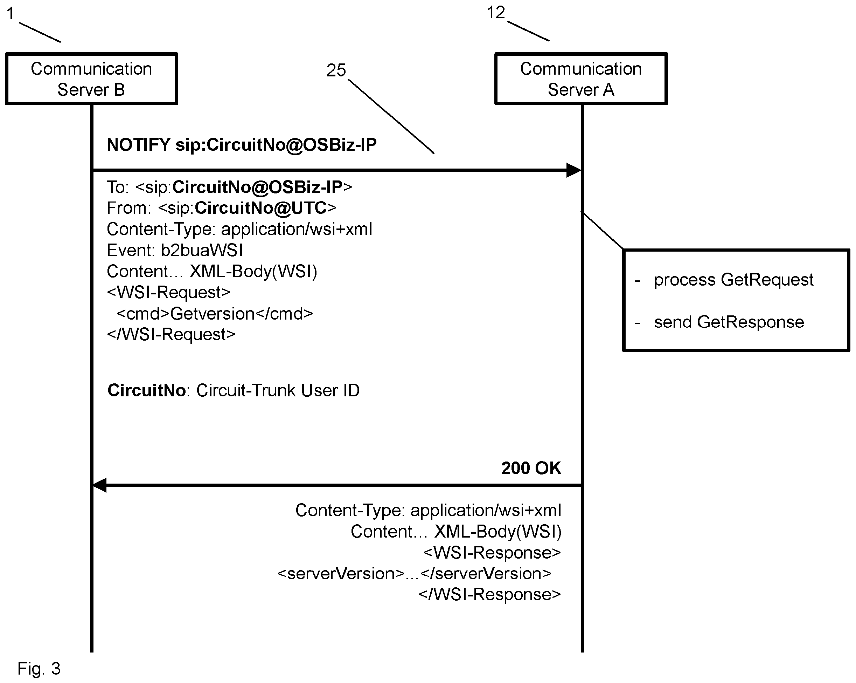

Fig. 3 zeigt schematisch einen Kommunikationsablauf zwischen der ersten Kommunikationsplattform 1 und der zweiten Kommunikationsplattform 12 zur Link-Prüfung und Initialisierung eines WSI Links gemäß einer Ausführungsform der Erfindung.

Um den WSI Link25 (siehe Fig. 1) implizit zwischen der Circuit und der OSBiz Instanz bzw. zwischen der ersten Kommunikationsplattform 1 und der zweiten Kommunikationsplattform 12 aufzubauen wird nach erfolgreicher SIP Registrierung vom TC 3 der ersten Kommunikationsplattform 1 eine erste SIP-Notify mit einer Prüfanfrage (z.B. WSI: Getversion, s.u.) gesendet. Zur weiteren Überwachung des WSI-Links 25 sendet die OSBiz (zweite Kommunikationsplattform 12) nun zyklisch SIP-Notify Meldungen mit derartigen Prüfanfragen (keep alive Kontrolle). Der XML-Body wird dabei für den Trunk gesendet.

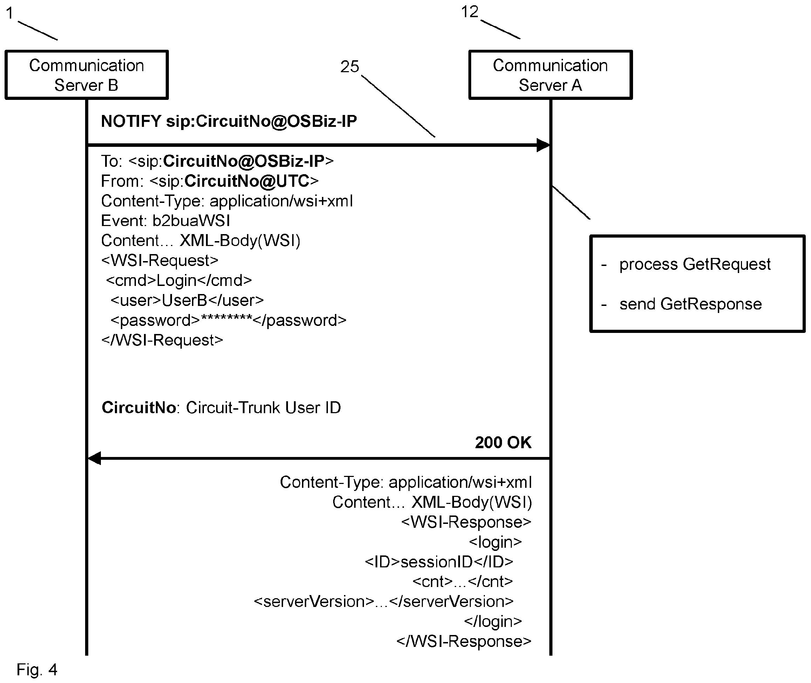

Fig. 4 zeigt schematisch den Ablauf für ein WSI Login gemäß einer Ausführungsform der Erfindung. Hierbei wird, um die Verbindung vom Partner Kommunikationsserver (z.B. zu der ersten Kommunikationsplattform 1, bzw. hier zum Circuit TC 3) herstellen zu können, wird durch den Login (z.B. mittels der VoIP Trunk Credentials) der TC 3 mit der OSBiz (zweite Kommunikationsplattform 12) authentifiziert. Der XML-Body wird dabei für den Trunk gesendet. In diesem Kontext wird nach dem Stand der Technik eine sogenannte Session ID (SessionID) ausgehandelt, die im weiteren Verlauf zu Identifizierung folgender Anfragen (Web Services Requests/Responses/Events) verwendet wird. Ein Logout kann durch beide Kommunikationsserver initiiert werden, u.a. auch wenn die Keep Alive Überwachung fehlschlägt.

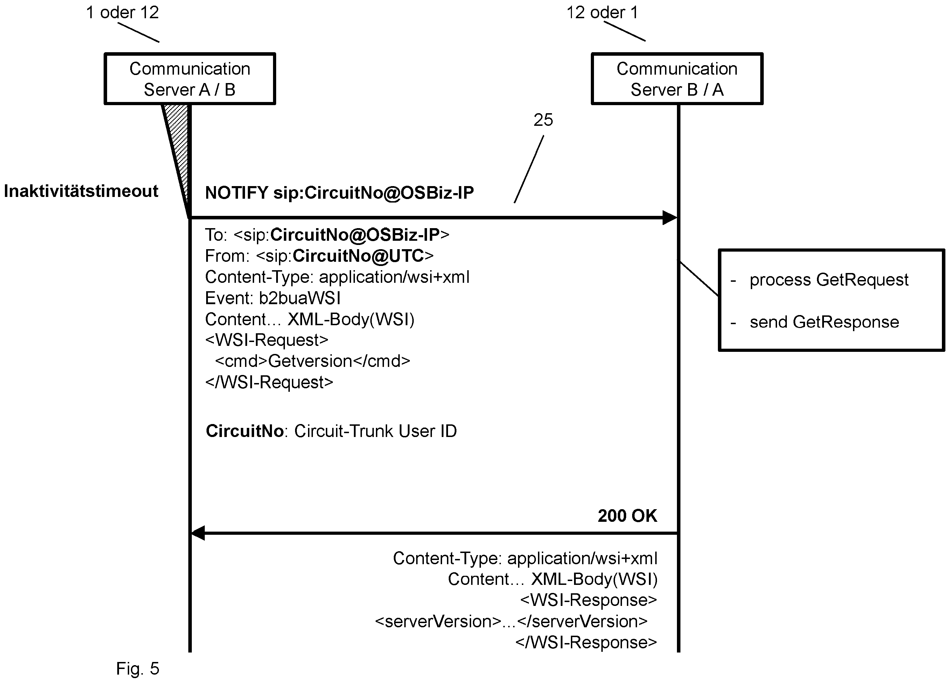

Fig. 5 zeigt schematisch den Ablauf zur Überwachung des WSI Links 25 gemäß einer Ausführungsform der Erfindung. Zur weiteren Überwachung des WSI-Links 25 sendet die OSBiz (zweite Kommunikationsplattform 12) oder Circuit (erste Kommunikationsplattform 1) nun zyklisch SIP-Notify Meldungen mit derartigen Prüfanfragen (keep alive Kontrolle), wenn für einen Zeitraum X (Inaktivitätstimeout) keine anderen WSI Anforderungen innerhalb der bestehenden Session gesendet werden. Der XML-Body wird dabei für den Trunk gesendet.

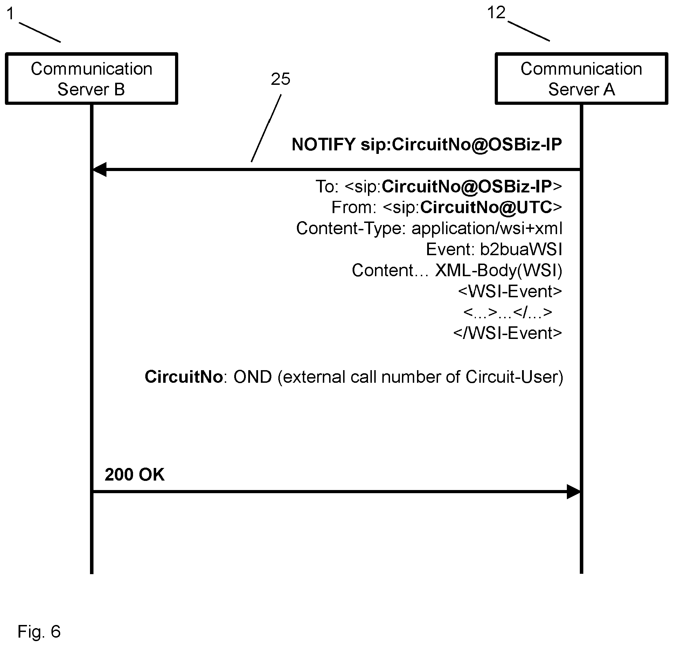

Fig. 6 zeigt schematisch den Ablauf für ein sogenanntes User Event. Bei User Events handelt es sich um automatische Mitteilungen bzw. Updates von User-spezifischen Informationen. Diese ermöglichen beispielsweise die Übertragung von User-Zustands- und/oder Präsensänderungen eines UCC Client (21) an die erste Kommunikationsplattform (1). Solche Events beinhalten neben der Beschreibung des Event-Typs (z.B. Presence Update) und den Adressierungsinformationen (welche Instant(en) adressiert das Event) auch alle notwendigen Statusdaten, um betroffene Clients auf der empfangenen Seite unmittelbar zu aktualisieren. Bei Presence-Events werden daher beispielsweise der neue Status eines Users x sowie zugehörige Metadaten wie Gültigkeitsdauer des Status übermittelt. Hier wird bei einem device-spezifischen XML-Body (Request, Response oder Event) der XML-Body für den spezifischen UCC User (z.B. Update des Anwesenheitsstatus - z.B. OND = external call number of Circuit User) gesendet.

Trunk- und User-bezogene Ausführungsbeispiele von WSI Befehlen, WSI Requests, WSI Responses und WSI Mitteilungen sind schematisch in Tabelle 1 angegeben. Es wird angemerkt, dass anstelle der dedizierten Unterscheidung zwischen <WSI Request>, <WSI Response> und <WSI Event> auch eine vereinfachte Darstellung, z. B. nur durch <WSI> sowie eine dedizierte Fehlerbehandlung möglich ist.

**Tabelle 1**

| | |
|---|---|
| **WSI Request / Event** | **WSI response** |
| <WSI-Request> | <WSI-Response> |
| <cmd>Getversion</cmd> | <serverVersion> |
| </WSI-Request> | <version>1.2.3</version> |
| | <application>UCSMART</application> |
| | <plattformType>OCC</plattformType> |
| | </serverVersion> |
| | </WSI-Response> |
| | or: |
| | <WSI-Response> |
| | <error>ServiceNotAvailable</error> |
| | </WSI-Response> |
| <WSI-Request> | <WSI-Response> |
| <cmd>Login</cmd> | <login> |
| <user>UserB</user> | <ID>SessionID</ID> |
| <password>********</password> | <cnt>2</cnt> |
| </WSI-Request> | <serverVersion>...</serverVersion> |
| | </login> |
| | </WSI-Response> |
| <WSI-Request> | <WSI-Response> |
| <cmd>Logout</cmd> | <logout/> |
| <gsSession>SessionID</gsSession> | </WSI-Response> |
| </WSI-Request> | |
| <WSI-Request> | <WSI-Response> |
| <cmd>GetServerParam</cmd> | <serverParam> |
| <user>100</user> | <dialout>0</dialout> |
| <gsSession>SessionID</gsSession> | <directories>pdir\|int\|ext\|edir</directories> |
| </WSI-Request> | <internation al>00</intern atio nal> |
| | <national>0</national> |
| | <country>49</country> |
| | <area>2304</area> |
| | </serverParam> |
| | </WSI-Response> |
| <WSI-Request> | <WSI-Response> |
| <cmd>PhBookSearch</cmd> | <PhBook cnt="3"> |
| <user>100</user> | <item> |
| <book>all</book> | <surname>Public</surname> |
| <name>Joe</name> | <firstname>Joe</firstname> |
| <maxcnt>100</maxcnt> | <displayname>Public,J.</displayname> |
| <gsSession>SessionID</gsSession> | <phone>102</phone> |
| </WSI-Request> | <pictureURL>/pictures/public.png</pictureURL> |
| | <type>int</type> |
| | </item> |
| | ... |
| | <item> |
| | <surname>Maier</surname> |
| | <firstname>Joe</firstname> |
| | <phone>12345678</phone3> |
| | <email>joe.maier@company.com</email> |
| | <pictureURL>/pictures/maier.jpg</pictureURL> |
| | <type>pdir</type> |
| | </item> |
| | </PhBook> |
| | </WSI-Response> |
| <WSI-Request> | <WSI-Response> |
| <cmd>PhBookLookup</cmd> | <item> |
| <user>100</user> | <surname>Smith</surnam> |
| <number>107</number> | <firstname>John</firstname> |
| <gsSession>SessionlD</gsSession> | <displayname>Smith,J.</displayname> |
| </WSI-Request> | <phone>107</phone> |
| | <pietureURL>/pietures/smith.png</pietureURL> |
| | <type>int</type> |
| | </item> |
| | </WSI-Response> |
| <WSI-Request> | <WSI-Response> |
| <cmd>JournalRead</cmd> | <Journal count="100"> |
| <user>100</user> | <item> |
| <gsSession>SessionID</gsSession> | <JID></JID> |
| </WSI-Request> | <direetion>in\|out</direetion> |
| | <caller>107</caller> |
| | <called>100</called> |
| | <alerting>100</alerting> |
| | <answering>100</answering> |
| | <begin>YYYY-MM-DD HH:MM:SS</begin> |
| | <end>YYYY-MM-DD HH:MM:SS</end> |
| | <duration>seconds</duration> |
| | <est>yes\|no</est> |
| | <intext>intlext</intext> </item> |
| | ... |
| | </journal> |
| | </WSI-Response> |
| <WSI-Request> | <WSI-Response> |
| <cmd>DirectorySearch</cmd> | ... |
| <user>100</user> | </WSI-Response> |
| <base>dc=las</base> | |
| <filter>sn=2</filter> | |
| <limit>maxcnt</limit> | |
| <gsSession>SessionID</gsSession> | |
| </WSI-Request> | |
| <WSI-Request> | <WSI-Response> |
| <cmd>DirectoryLookup</cmd> | ... |
| <user>100</user> | </WSI-Response> |
| <telephoneNumber>102</telephoneNu mber> | |
| <gsSession>SessionlD</gsSession> | |
| </WSI-Request> | |
| <WSI-Event> | |
| <cmd>JournalUpdate</cmd> | |
| <user>100</user> | |
| <gsSession>SessionID</gsSession> | |
| </WSI-Event> | |
| <WSI-Event> | |
| <cmd>PresenceUpdate</cmd> | |
| <user>100</user> | |
| <state> ... </state> | |
| ... | |
| <gsSession>SessionlD</gsSession> | |
| </WSI-Event> | |

Die oben erläuterten Ausführungsbeispiele realisieren eine Integration von UCC-Diensten bzw. Features zwischen einem WebRTC- und einer SIP-basierten Kommunikationsplattform durch WSI over SIP. Insbesondere bietet die Übertragung von UCC-Diensten für das Interworking zwischen Kommunikationsplattformen (z.B. mit Circuit) mittels des über den VoIP Kanal getunnelten WSI die folgende Vorteile. In Bezug auf die Sicherheit, sind die folgenden Aspekte vorteilhaft:
- einheitlicher Login
- nur ein Attack-Vektor (nur ein Port)
- keine direkte Erreichbarkeit der Web Server aus dem Internet, daher unempfindlich für diverse Standard-HTTP-Angriffsverfahren

Darüber hinaus kann die Synchronität über die Laufzeit gewährleistet werden. Es wird eine vereinfachte Infrastruktur inklusive eine einfache Realisierbarkeit von Load Balancing ermöglicht und die oben beschriebenen Lösungen sind mit geringerer Administrationsaufwand (z.B. bezüglich der Firewall-Konfiguration) realisierbar.

### Bezugszeichen

- 1: erste Kommunikationsplattform
- 2: Load Balancer
- 3: Telephony Connector
- 4: Voice Call Control (erste Kommunikationsplattform)
- 5: VoIP Protocol Manager (erste Kommunikationsplattform)
- 6: SIP Protocol Stack (erste Kommunikationsplattform)
- 7: UCC Protocol Manager (erste Kommunikationsplattform)
- 8: WSI Link
- 9: UCC Connector
- 10: Kommunikationsverbindung WebRTC Client - erster Kommunikationsserver
- 11: WebRTC Client
- 12: zweite Kommunikationsplattform
- 13: Private Branch Exchange - PBX
- 14: Voice Call Control (zweite Kommunikationsplattform)
- 15: SBC (zweite Kommunikationsplattform)
- 16: VoIP Protocol Manager (zweite Kommunikationsplattform)
- 17: SIP Protocol Stack (zweite Kommunikationsplattform)
- 18: UCC Protocol Manager (zweite Kommunikationsplattform)
- 19: UCC Server
- 20: WSI Link
- 21: UCC Client
- 22: NAT / Firewall (zweite Kommunikationsplattform)
- 23: Internet
- 24: NAT / Firewall (erste Kommunikationsplattform)
- 25: WSI Link

## Patentansprüche

1. Computer-implementiertes Verfahren zur Vernetzung einer ersten WebRTC-basierten Kommunikationsplattform (1) mit zumindest einem Load Balancer (2), zumindest einem Telephony Connector, TC (3) und einem UCC, Unified Communication and Collaboration, Connector (9) mit einer zweiten SIP-basierten Kommunikationsplattform (12) auf welcher UCC-Web-Services bereitgestellt werden, und welche mit zumindest einem UCC-Client (21) über WSI, Web Service Interface, (20) kommuniziert und zumindest einer PBX (13), wobei das Verfahren die folgenden Schritte aufweist:
- Registrieren, von zumindest einem WebRTC-Client (11), über den UCC Connector (9) der ersten Kommunikationsplattform (1);
- Aufbauen einer SIP-Trunk-Kommunikationsverbindung zwischen dem LB (2) und dem TC (3) der ersten Kommunikationsplattform (1) und einem auf der zweiten Kommunikationsplattform (12) bereitgestellten UCC-Web-Service, wobei eine SIP Notify Meldung verwendet wird, welche WSI in XML überträgt, um so einen WSI over SIP Link (25) bereitzustellen.

2. Computer-implementiertes Verfahren gemäß Anspruch 1, wobei der XML Body sowohl für den SIP-Trunk als auch für einen spezifischen UCC-User gesendet wird.

3. Computer-implementiertes Verfahren gemäß einem der vorhergehenden Ansprüche, wobei die SIP Notify Meldung mit einer Prüfanfrage von dem TC (3) der ersten Kommunikationsplattform (1) an die zweite Kommunikationsplattform (12) gesendet wird.

4. Computer-implementiertes Verfahren gemäß Anspruch 1, wobei das Verfahren weiterhin einen Schritt des Überwachens des WSI over SIP Links (25) umfasst, wobei die zweite Kommunikationsplattform (12) zyklisch SIP Notify Meldungen mit Prüfanfragen an die erste Kommunikationsplattform (1) sendet.

5. Computer-implementiertes Verfahren gemäß einem der vorhergehenden Ansprüche, wobei das Verfahren weiterhin einen Schritt des Authentifizierens umfasst, wobei sich der TC (3) an der zweiten Kommunikationsplattform (12) über den WSI over SIP Link (25) durch ein Login, insbesondere mittels VoIP Trunk Credentials, authentifiziert.

6. Computer-implementiertes Verfahren gemäß einem der vorhergehenden Ansprüche, wobei die Kennzeichnung eines Transports von dem WSI XML Body innerhalb der SIP Notify Meldung ein Content-Type: application/wsi+xml und ein Event:b2buaWSI umfasst.

7. Computer-implementiertes Verfahren gemäß Anspruch 6, wobei das Verfahren weiterhin einen Schritt einer Fehlerbehandlung durch Kapselung innerhalb des XML Body, wobei jedes Notify-Event: b2buaWSI mit einer 200 OK Meldung beantwortet wird.

8. Computer-implementiertes Verfahren gemäß irgendeinem der vorhergehenden Ansprüche, wobei der Load Balancer (2) verbindungslos arbeitet.

9. Computer-implementiertes Verfahren gemäß Anspruch 1, wobei es sich bei der ersten Kommunikationsplattform (1) um Circuit handelt.

10. Computer-implementiertes Verfahren gemäß Anspruch 1 oder 2, wobei es sich bei der zweiten Kommunikationsplattform (12) um OSBiz handelt.

11. Kommunikationsnetzwerk mit einer ersten WebRTC-Kommunikationsplattform (1) mit einem verbindungslos arbeitenden Load Balancer (2), zumindest einem Telephony Connector, TC, (3) und einem UCC Connector (9), und mit einer zweiten SIP-basierten Kommunikationsplattform (12), auf welcher zumindest ein UCC-Web-Service bereitgestellt wird, und welche mit zumindest einem UCC-Client (21) über WSI (20) kommuniziert und zumindest einer PBX (13), wobei die erste Kommunikationsplattform dazu ausgebildet ist (1) den zumindest einen UCC-Web-Service von der zweiten Kommunikationsplattform (12) über einen WSI over SIP Link (25) zwischen der ersten und zweiten Kommunikationsplattform (1, 12) abzurufen.

## Claims

1. Computer-implemented method for networking a first WebRTC-based communication platform (1) with at least one load balancer (2), at least one Telephony Connector, TC (3) and a UCC, Unified Communication and Collaboration, Connector (9) with a second SIP-based communication platform (12) on which UCC web services are provided and which communicates with at least one UCC client (21) via WSI, Web Service Interface, (20) and at least one PBX (13), the method comprising the following steps:
- Registering at least one WebRTC client (11) via the UCC Connector (9) of the first communication platform (1);
- Establishing a SIP trunk communication link between the LB (2) and the TC (3) of the first communication platform (1) and a UCC web service provided on the second communication platform (12), wherein a SIP Notify message is used transmitting WSI in XML so as to provide a WSI over SIP link (25).

2. Computer-implemented method according to claim 1, wherein the XML body is sent for both the SIP trunk and a specific UCC user.

3. Computer-implemented method according to any one of the preceding claims, wherein the SIP Notify message is sent with a verification request from the TC (3) of the first communication platform (1) to the second communication platform (12).

4. Computer-implemented method according to claim 1, the method further comprising a step of monitoring the WSI over SIP link (25), wherein the second communication platform (12) cyclically sends SIP Notify messages with verification requests to the first communication platform (1).

5. Computer-implemented method according to any one of the preceding claims, the method further comprising a step of authenticating, wherein the TC (3) authenticates to the second communication platform (12) via the WSI over SIP link (25) by a login, in particular using VoIP trunk credentials.

6. Computer-implemented method according to any one of the preceding claims, wherein the marking of a transport from the WSI XML body within the SIP Notify message comprises a Content-Type: application/wsi+xml and an Event:b2buaWSI.

7. Computer-implemented method according to claim 6, the method further comprising a step of error handling by encapsulation within the XML body, wherein each Notify Event: b2buaWSI is responded to with a 200 OK message.

8. Computer-implemented method according to any one of the preceding claims, wherein the load balancer (2) operates connectionless.

9. Computer-implemented method according to claim 1, wherein the first communication platform (1) is Circuit.

10. Computer-implemented method according to claim 1 or 2, wherein the second communication platform (12) is OSBiz.

11. Communication network with a first WebRTC communication platform (1) with a connectionless load balancer (2), at least one Telephony Connector, TC, (3) and a UCC Connector (9), and with a second SIP-based communication platform (12) on which at least one UCC web service is provided, and which communicates with at least one UCC client (21) via WSI (20), and at least one PBX (13), wherein the first communication platform (1) is adapted to retrieve the at least one UCC web service from the second communication platform (12) via a WSI over SIP link (25) between the first and second communication platforms (1, 12).

## Revendications

1. Procédé informatique pour la mise en réseau d'une première plate-forme de communication (1) basée sur WebRTC avec au moins un équilibreur de charge, LB, (2), au moins un connecteur téléphonique, TC, (3) et un connecteur UCC, Unified Communication and Collaboration, (9) avec une deuxième plate-forme de communication basée sur SIP (12) sur laquelle des services Web UCC sont mis à disposition et qui communique avec au moins un client UCC (21) via WSI, Web Service Interface, (20) et au moins un PBX (13), le procédé comprenant les étapes suivantes :
- enregistrement d'au moins un client WebRTC (11) via le connecteur UCC (9) de la première plate-forme de communication (1) ;
- établissement d'une connexion de communication SIP Trunk entre le LB (2) et le TC (3) de la première plate-forme de communication (1) et un service Web UCC fourni sur la seconde plate-forme de communication (12), en utilisant un message de notification SIP qui transmet WSI en XML de manière à fournir un lien WSI over SIP (25).

2. Procédé informatique selon la revendication 1 dans lequel le corps XML est envoyé aussi bien pour le trunk SIP que pour un utilisateur UCC spécifique.

3. Procédé informatique selon l'une des revendications précédentes dans lequel le message SIP Notify est envoyé avec une demande de vérification par le TC (3) de la première plate-forme de communication (1) à la deuxième plate-forme de communication (12).

4. Procédé informatique selon la revendication 1 comprenant également une étape de surveillance du lien WSI over SIP (25), dans lequel la deuxième plate-forme de communication (12) envoie de manière cyclique des messages de notification SIP contenant des demandes de vérification à la première plate-forme de communication (1).

5. Procédé informatique selon l'une des revendications précédentes comprenant également une étape d'authentification, dans lequel le TC (3) s'authentifie auprès de la deuxième plate-forme de communication (12) via le lien WSI over SIP (25) par un login, notamment au moyen de VoIP Trunk Credentials.

6. Procédé informatique selon l'une des revendications précédentes dans lequel l'identification d'un transport du corps XML WSI à l'intérieur du message de notification SIP comprend un type de contenu: application/wsi+xml et un événement: b2buaWSI.

7. Procédé informatique selon la revendication 6 comprenant également une étape de traitement d'erreur par encapsulation dans le corps XML, dans lequel chaque événement de notification: b2buaWSI est répondu par un message 200 OK.

8. Procédé informatique selon l'une des revendications précédentes dans lequel l'équilibreur de charge (2) fonctionne sans connexion.

9. Procédé informatique selon la revendication 1, dans lequel la première plate-forme de communication (1) est Circuit.

10. Procédé informatique selon la revendication 1 ou 2, dans lequel la deuxième plate-forme de communication (12) est OSBiz.

11. Réseau de communication comportant une première plate-forme de communication WebRTC (1) avec un équilibreur de charge (2) fonctionnant sans connexion, au moins un connecteur téléphonique, TC, (3) et un connecteur UCC (9), et une deuxième plate-forme de communication (12) basée sur SIP sur laquelle au moins un service Web UCC est mis à disposition et qui communique avec au moins un client UCC (21) via WSI (20) et au moins un PBX (13), la première plate-forme de communication (1) étant conçue pour appeler l'au moins un service Web UCC de la deuxième plate-forme de communication (12) via un lien WSI over SIP (25) entre la première et la deuxième plate-forme.
